(19) Europäisches Patentamt

European Patent Office

Office européen des brevets

(11) **EP 0 967 013 B1**

(12) **FASCICULE DE BREVET EUROPEEN**

(45) Date de publication et mention
de la délivrance du brevet:
**27.08.2003 Bulletin 2003/35**

(51) Int Cl.⁷: **B01J 29/70**, B01J 29/06

(21) Numéro de dépôt: **99401511.3**

(22) Date de dépôt: **18.06.1999**

(54) **Catalyseur à base d'une zéolithe MTT, TON ou FER et d'un élément du groupe VB et son utilisation pour l'amélioration du point d'écoulement de charges hydrocarbonées**

Zeolit MTT,TON oder FER und ein Element der Gruppe VB beinhaltender Katalysator und seine Verwendung für die Verbesserung des Stockpunktes einer Erdölfraktion

Catalyst containing a zeolite MTT, TON or FER and an element of the group VB and the use thereof for improving the pour point of hydrocarbon feedstocks

(84) Etats contractants désignés:
**DE ES IT NL**

(30) Priorité: **25.06.1998 FR 9808052**

(43) Date de publication de la demande:
**29.12.1999 Bulletin 1999/52**

(73) Titulaire: **INSTITUT FRANCAIS DU PETROLE**
**92500 Rueil Malmaison (FR)**

(72) Inventeurs:
• **Benazzi, Eric**
  **78400 Chatou (FR)**
• **Kasztelan, Slavik**
  **92500 Rueil Malmaison (FR)**
• **Marchal-George, Nathalie**
  **69230 Saint Genis Laval (FR)**

(56) Documents cités:
**EP-A- 0 178 723**     **EP-A- 0 863 198**
**WO-A-97/09397**       **US-A- 4 371 457**
**US-A- 4 777 157**

## Description

La présente invention concerne un procédé pour améliorer le point d'écoulement de charges contenant des paraffines, linéaires et/ou peu ramifiées, longues (plus de 10 atomes de carbone), en particulier pour convertir, avec un bon rendement, des charges possédant des points d'écoulement élevés en au moins une coupe présentant un point d'écoulement bas et un haut indice de viscosité pour les bases huiles.

La présente invention a également pour objet un catalyseur comportant au moins une zéolithe (tamis moléculaire) de type structural MTT, TON ou FER ou toutes combinaisons possibles de ces dernières, au moins un élément hydrodésydrogénant, de préférence choisi parmi les éléments du groupe VIB et du groupe VIII de la classification périodique, au moins un élément promoteur déposé qui est choisi dans le groupe formé par le bore, le silicium, le phosphore, au moins du fluor et son utilisation pour la conversion des hydrocarbures et le procédé de réduction du point d'écoulement avec ce catalyseur.

## Art antérieur

Les lubrifiants de haute qualité sont d'une importance primordiale pour le bon fonctionnement des machines modernes, des automobiles, et des camions. Cependant, la quantité de paraffines issues directement du pétrole, non traitées, et possédant les propriétés adéquates pour constituer des bons lubrifiants est très faible par rapport à la demande croissante dans ce secteur.

Le traitement des fractions pétrolières lourdes à fortes teneurs en paraffines linéaires ou peu ramifiées est nécessaire afin d'obtenir des huiles de base de bonne qualité et ce avec les meilleurs rendements possibles, par une opération qui vise à éliminer les paraffines linéaires ou très peu branchées, des charges qui seront ensuite utilisées en tant que huiles de base ou en tant que kérosène ou carburéacteur (jet fuel).

En effet, les paraffines de haut poids moléculaire qui sont linéaires ou très faiblement branchées et qui sont présentes dans les huiles ou dans le kérosène ou carburéacteur conduisent à des points d'écoulement hauts et donc à des phénomènes de figeage pour des utilisations à basse température. Afin de diminuer les valeurs des points d'écoulement, ces paraffines linéaires pas ou très peu branchées doivent être entièrement ou partiellement éliminées. Cette opération peut s'effectuer par extraction par des solvants tels que le propane ou la méthyl-éthyl cétone, on parle alors de déparaffinage au propane ou à la méthyl éthyl-cétone (MEK). Cependant, ces techniques sont coûteuses, longues et pas toujours aisées à mettre en oeuvre.

Un àutre moyen est un craquage sélectif des chaînes paraffiniques linéaires les plus longues qui conduit à la formation de composés de poids moléculaire plus faible dont une partie peut être éliminée par distillation.

Compte tenu de leur sélectivité de forme les zéolithes sont parmi les catalyseurs les plus utilisés. L'idée qui prévaut à leur utilisation est qu'il existe des structures zéolithiques dont les ouvertures de pores sont telles qu'elles permettent l'entrée dans leur microporosité des paraffines linéaires longues ou très peu branchées mais en excluent les paraffines ramifiées, les napthènes et les aromatiques. Ce phénomène conduit ainsi à un craquage sélectif des paraffines linéaires ou très peu branchées.

Des catalyseurs à base de zéolithes ayant des tailles de pores intermédiaires telles que les ZSM-5, ZSM-11, ZSM-12, ZSM-22, ZSM-23, ZSM-35 et ZSM-38 ont été décrits pour leur utilisation dans ces procédés.

Par ailleurs, il a été constaté que les procédés utilisant ces zéolithes (ZSM-5, ZSM-11, ZSM-12, ZSM-22, ZSM-23, ZSM-35 et ZSM-38) permettent d'obtenir des huiles par craquage de charges contenant des quantités de paraffines linéaires ou très peu branchées inférieures à 50 % poids. Cependant, pour des charges contenant des quantités supérieures de ces composés il est apparu que leur craquage conduit à la formation de quantités importantes de produits de poids moléculaires plus faibles, tels que du butane, propane, éthane et méthane, ce qui réduit considérablement le rendement en produits recherchés.

Pour pallier à ces inconvénients, la demanderesse a porté ses efforts de recherche sur la mise au point de catalyseurs contenant au moins une zéolithe de type structural MTT, TON ou FER ou toutes combinaisons possibles de ces dernières, et de préférence, contenant également au moins un élément choisi parmi les éléments du groupe VIB et du groupe VIII de la classification périodique, du bore et/ou du silicium, éventuellement du phosphore, éventuellement au moins un élément du groupe VIIA favorisant également une isomérisation de ces composés.

La présente invention propose un procédé catalytique pour la réduction du point d'écoulement à base de tels catalyseurs.

WO97/09397 divulgue un catalyseur comprenant une zéolithe NU-10, NU-23, NU-87, EU-13, ou Theta-1, au moins une fonction hydrodéshydrogénante, par exemple un métal du groupe VIII et/ou un métal du groupe VI B, et/ou le rhénium et/ou le niobium.

## Objet de l'invention

Un objet de l'invention est un procédé pour l'amélioration du point d'écoulement d'une charge paraffinique comportant des paraffines de plus de 10 atomes de carbone, dans lequel la charge à traiter est mise au contact d'un catalyseur contenant au moins une zéolithe de type structural MTT, TON ou FER ou toutes combinaisons possibles de ces dernières au moins une matrice minérale poreuse, au moins un élément du groupe VB et éventuellement au moins un élément choisi parmi les éléments du groupe VIB et du groupe VIII de la classification périodique, éventuellement au moins un élément promoteur choisi dans le groupe formé par le bore, le silicium, le phosphore, au moins du fluor à une température comprise entre 170 et 500°C, une pression entre 1 et 250 bar et une vitesse volumique horaire entre 0,05 et 100 h$^{-1}$, en présence d'hydrogène à raison de 50 à 2000 l/l de charge.

Les zéolithes comprises dans le catalyseur selon l'invention possèdent les types structuraux TON, MTT ou FER et sont décrites dans l'ouvrage "Atlas of Zeolite Structure Types", W.M. Meier, D.H. Olson and Ch. Baerlocher, 4th Revised edition, 1996, Elsevier.

Ledit catalyseur présente une activité et une sélectivité en déparaffinage (amélioration du point écoulement) plus importante que les formules catalytiques à base de zéolithes (tamis moléculaire) MTT, TON et FER connues dans l'art antérieur. Sans vouloir être lié par une quelconque théorie, il semble que cette activité particulièrement élevée des catalyseurs de la présente invention est due aux renforcement de l'acidité du catalyseur par la présence de l'élément du groupe VB qui induit une amélioration des propriétés par rapport aux catalyseurs utilisés habituellement.

Avantageusement ce procédé permet de convertir une charge possédant un haut point d'écoulement en un produit possédant un point d'écoulement plus bas. Il est donc applicable pour la réduction du point d'écoulement des gazoles par exemple. Il permet également de convertir des charges plus lourdes en huiles possédant un haut indice de viscosité.

La charge est composée, entre autres, de paraffines linéaires et/ou peu ramifiées comportant au moins 10 atomes de carbone, de préférence de 15 à 50 atomes de carbone et avantageusement de 15 à 40 atomes de carbone. Les charges lourdes (pour faire des huiles) contiennent des paraffines ayant essentiellement plus de 30 atomes de carbone, les gazoles contiennent généralement des paraffines à 10-30 atomes de carbone.

Les produits isomérisés, présents dans les produits finaux, peuvent contenir entre environ 65 et 80 % de produits monobranchés et entre environ 20 et 35 % de produits multibranchés. On entend par produits monobranchés des paraffines linéaires comportant un seul groupe méthyle, et par produits dibranchés des paraffines linéaires comportant 2 groupes méthyles qui ne sont pas portés par le même atome de carbone. Par extension on définit les multibranchés.

L'utilisation du catalyseur selon l'invention dans les conditions décrites ci-dessus permet, notamment, la production de produits à faible point d'écoulement avec de bons rendements, et à haut indice de viscosité pour les huiles.

## Description détaillée de l'invention

La zéolithe de type structural TON regroupe les zéolithes; Theta, **ISI-1, NU-10,** KZ-2 et ZSM-22 (décrite dans le brevet US 4810357). La zéolithe de type structural MTT regroupe les zéolithes ZSM-23 (décrite dans les brevets US 4076842 et US 4104151), EU-13, ISI-4, KZ-1 et SSZ-32 (décrite dans le brevet US 5053373). La zéolithe de type structural FER regroupe les zéolithes suivantes qui ont essentiellement la même structure : Ferrierite, FU-9, NU-23, ZSM-35 (décrite dans le brevet 4016245), ISI-6. Les zéolithes MTT, TON et FER utilisées dans le catalyseur selon l'invention peuvent aussi être préparées en milieu fluorure. Sont préférées les zéolithes NU-10, EU-13, NU-23.

Le rapport Si/Al global des zéolithes entrant dans la composition des catalyseurs selon l'invention ainsi que la composition chimique des échantillons sont déterminés par fluorescence X et absorption atomique

Les rapports Si/Al des zéolithes décrites ci-dessus sont celles obtenues à la synthèse selon les modes opératoires décrits dans les différents documents cités ou bien obtenus après des traitements de désalumination postsynthèse bien connus de l'homme de l'art, tels que et à titre non exhaustif les traitements hydrothermiques suivis ou non d'attaques acides ou bien encore les attaques acides directes par des solutions d'acides minéraux ou organiques.

Les zéolithes entrant dans la composition des catalyseurs selon l'invention sont calcinées et échangées par au moins un traitement par une solution d'au moins un sel d'ammonium de manière à obtenir la forme ammonium des zéolithes qui une fois calcinée conduisent à la forme hydrogène des dites zéolithes.

Les zéolithes entrant dans la composition du catalyseur selon l'invention sont au moins en partie, de préférence pratiquement totalement, sous forme acide, c'est-à-dire sous forme hydrogène (H$^+$). Le rapport atomique Na/T est généralement inférieur à 10% et de préférence inférieur à 5% et de manière encore plus préférée inférieur à 1%.

Le catalyseur objet de l'invention contient au moins une zéolithe de type structural MTT, TON ou FER ou toutes combinaisons possibles de ces dernières en mélange avec une matrice , au moins un élément du groupe VB et au moins une matrice minérale poreuse, et éventuellement au moins un élément (c'est-à-dire métal ou composé) du groupe VI ou du groupe VIII.

Dans le cas où l'élément est au moins un métal du groupe VIII, de préférence un métal noble et avantageusement choisi dans le groupe formé par le Pt et le Pd, il est introduit dans le tamis moléculaire par exemple par imprégnation à sec, par échange ionique ou toute autre méthode connue de l'homme du métier, ou bien il est introduit dans la matrice.

Le catalyseur de la présente invention renferme généralement en % poids par rapport à la masse totale du catalyseur au moins un métal choisi dans les groupes suivants et avec les teneurs suivantes :

- 0,1 à 99,8%, de préférence 0,1 à 90%, de manière plus préférée de 0,1 à 80% et de manière très préférée de 0,1 à 70% d'au moins une zéolithe de type structural TON, MTT ou FER comme définis précédemment.
- 0,1 à 99,7%, de préférence de 1 à 99%, de manière plus préférée de 1 à 90% d'au moins une matrice minérale poreuse amorphe ou mal cristallisée de type oxyde,
- 0,1 à 60%, de préférence de 0,1 à 50% et de manière encore plus préférée de 0.1 à 40% d'au moins un élément parmi le groupe VB
- de 0 à 60%, de préférence de 0,1 à 50% et de manière encore plus préférée de 0,1 à 40% d'au moins un élément choisi parmi les éléments du groupe VIB et du groupe VIII
- de 0 à 20%, de préférence de 0,1 à 15% et de manière encore plus préférée de 0,1 à 10% poids d'au moins un élément promoteur choisi parmi les éléments du groupe constitué par le phosphore, le bore et le silicium,
- de 0,1 à 15% et de manière préférée de 0,1 à 10% de fluor

Un catalyseur préféré de l'invention contient comme élément promoteur du bore et/ou du silicium et éventuellement de 0 à 20%, de préférence de 0,1 à 15% et de manière encore plus préférée de 0,1 à 10% de phosphore (% oxyde).

Le catalyseur selon l'invention renferme ainsi généralement et globalement de 0,1 à 65% (pds oxyde), de préférence 0,1 à 60% et avantageusement de 0,1 à 55% de silicium (contenu dans la charpente de la zéolithe + silicium déposé qui est sous forme amorphe et en général principalement localisé sur la matrice).

Les éléments du groupe VIB et du groupe VIII éventuellement introduits dans le catalyseur selon l'invention peuvent être présents en totalité ou partiellement sous la forme métallique et/ou oxyde et/ou sulfure.

Parmi les éléments du groupe VIB, le molybdène et le tungstène sont préférés. Dans le cas où le catalyseur comporte un métal hydrogénant du groupe VIII de préférence un métal noble et avantageusement le Pt et/ou le Pd, le catalyseur est généralement réduit dans le réacteur en présence d'hydrogène et dans des conditions bien connues de l'homme de l'art.

La teneur en métal noble ainsi éventuellement introduit, exprimée en % poids par rapport à la masse de zéolithe engagée, est généralement inférieure à 5 %, de préférence inférieure à 3 % et la teneur en métal noble dans le catalyseur est généralement inférieure à 2 % poids.

Dans le cas ou le métal hydrogénant appartient au groupe VIII, et de préférence est le Pt et/ou le Pd, il peut également et très avantageusement être déposé sur le support par tout procédé connu de l'homme de l'art et permettant le dépôt du métal sur le tamis moléculaire. On peut utiliser la technique d'échange cationique avec compétition où le compétiteur est de préférence le nitrate d'ammonium, le rapport de compétition étant au moins égal à environ 20 et avantageusement d'environ 30 à 200. Dans le cas du platine ou du palladium, on utilise habituellement un complexe tétramine du platine ou un complexe tétramine du palladium : ces derniers se déposeront alors pratiquement en totalité sur la zéolithe. Cette technique d'échange cationique peut également être utilisée pour déposer directement le métal sur la poudre de tamis moléculaire, avant son mélange éventuel avec une matrice.

Le dépôt du métal (ou des métaux) du groupe VIII est suivi en général d'une calcination sous air ou oxygène, usuellement entre 300 et 600°C durant 0,5 à 10 heures, de préférence entre 350°C et 550°C durant 1 à 4 heures. On peut procéder ensuite à une réduction sous hydrogène, généralement à une température comprise entre 300 et 600°C pendant 1 à 10 heures, de préférence on opérera entre 350° et 550°C pendant 2 à 5 heures.

On peut également déposer le platine et/ou le palladium non plus directement sur le tamis moléculaire, mais sur la matrice (par exemple le liant aluminique), avant ou après l'étape de mise en forme, en mettant en oeuvre un échange anionique avec de l'acide hexachloroplatinique, de l'acide hexachloropalladique et/ou du chlorure de palladium en présence d'un agent compétiteur, par exemple l'acide chlorhydrique. En général après le dépôt de platine et/ou de palladium, le catalyseur est comme précédemment soumis à une calcination puis réduit sous hydrogène comme indiqué ci-dessus.

Les sources d'élément du groupe VIB qui peuvent être utilisées sont bien connues de l'homme du métier. Par exemple, parmi les sources de molybdène et de tungstène, on peut utiliser les oxydes et hydroxydes, les acides molybdiques et tungstiques et leurs sels en particulier les sels d'ammonium tels que le molybdate d'ammonium, l'heptamolybdate d'ammonium, le tungstate d'ammonium, l'acide phosphomolybdique, l'acide phosphotungstique et leurs sels. On utilise de préférence les oxydes et les sels d'ammonium tels que le molybdate d'ammonium, l'heptamolybdate d'ammonium et le tungstate d'ammonium

Le catalyseur de !a présente invention peut renfermer un métal du groupe VIII tel que fer, ruthénium, rhodium, palladium, osmium, iridium, platine et de préférence cobalt, nickel. D'une manière avantageuse on utilise les associations des éléments des groupes VI et VIII non noble suivantes : nickel-molybdène, cobalt-molybdène, fermolybdène, fer-tungstène, nickel-tungstène, cobalt-tungstène, les associations préférées sont : nickel-molybdène, nickel-tungstène. Il est également possible d'utiliser des associations de trois métaux par exemple nickel-cobalt-molybdène.

Les sources d'élément du groupe VIII qui peuvent être utilisées sont bien connues de l'homme du métier. Par exemple, on utilisera les nitrates, les sulfates, les phosphates, les halogénures par exemple, chlorures, bromures et fluorures, les carboxylates par exemple acétates et carbonates.

Le catalyseur de la présente invention renferme également au moins une matrice minérale poreuse amorphe ou mal cristallisée généralement de type oxyde. On peut citer à titre d'exemple non limitatif les alumines, les silices, les silice-alumines. On peut choisir également les aluminates. On préfère utiliser des matrices contenant de l'alumine, sous toutes ces formes connues de l'Homme du métier, et de manière encore plus préférée les alumines, par exemple l'alumine gamma.

On peut aussi avantageusement utiliser des mélanges d'alumine et de silice, des mélanges d'alumine et de silice-alumine.

L'élément promoteur éventuel (P, B, Si) est déposé sur le catalyseur. Il est de préférence sur le support contenant au moins la zéolithe et la matrice, et contenant également éventuellement le ou les éléments des groupes VIB et VIII.

L'élément promoteur, et en particulier le silicium introduit sur le support selon l'invention, est principalement localisé sur la matrice du support et peut être caractérisé par des techniques telles que la microsonde de Castaing (profil de répartition des divers éléments), la microscopie électronique par transmission couplée à une analyse X des composants du catalyseurs, ou bien encore par l'établissement une cartographie de répartition des éléments présents dans le catalyseur par microsonde électronique. Ces analyses locales vont fournir la localisation des divers éléments, en particulier la localisation de l'élément promoteur, notamment de la silice amorphe sur la matrice du support due à l'introduction du silicium promoteur selon l'invention. La localisation du silicium de la charpente de la zéolithe contenue dans le support est aussi révélée. Par ailleurs, une estimation quantitative des teneurs locales en silicium ou autres éléments promoteur peut-être effectuée.

D'autre part, la RMN du solide du $^{29}$Si à rotation à l'angle magique est une technique qui permet de détecter la présence de silice amorphe introduite dans le catalyseur selon le mode opératoire décrit dans la présente invention.

La source de bore peut être l'acide borique, de préférence l'acide orthoborique $H_3BO_3$, le biborate ou le pentaborate d'ammonium, l'oxyde de bore, les esters boriques. Le bore peut par exemple être introduit sous la forme d'un mélange d'acide borique, d'eau oxygénée et un composé organique basique contenant de l'azote tels que l'ammoniaque, les amines primaires et secondaires, les amines cycliques, les composés de la famille de la pyridine et des quinoléines et les composés de la famille du pyrrole. Le bore peut être introduit par exemple par une solution d'acide borique dans un mélange eau/alcool.

La source de phosphore préférée est l'acide orthophosphorique $H_3PO_4$, mais ses sels et esters comme les phosphates d'ammonium conviennent également. Le phosphore peut par exemple être introduit sous la forme d'un mélange d'acide phosphorique et un composé organique basique contenant de l'azote tels que l'ammoniaque, les amines primaires et secondaires, les amines cycliques, les composés de la famille de la pyridine et des quinoléines et les composés de la famille du pyrrole.

L'imprégnation du molybdène peut être facilitée par ajout d'acide phosphorique dans les solutions de paramolybdate d'ammonium, ce qui permet d'introduire aussi le phosphore de façon à promouvoir l'activité catalytique. D'autres composés du phosphore peuvent être utilisés comme il est bien connu de l'homme du métier.

De nombreuses sources de silicium peuvent être employées. Ainsi, on peut utiliser l'orthosilicate d'éthyle Si(OEt)$_4$, les siloxanes, les polysiloxanes, les silicones, les émulsions de silicones, les silicates d'halogénures comme le fluorosilicate d'ammonium $(NH_4)_2 SiF_6$ ou le fluorosilicate de sodium $Na_2SiF_6$. L'acide silicomolybdique et ses sels, l'acide silicotungstique et ses sels peuvent également être avantageusement employés. Le silicium peut être ajouté par exemple par imprégnation de silicate d'éthyle en solution dans un mélange eau/alcool. Le silicium peut être ajouté par exemple par imprégnation d'une émulsion de silicone dans l'eau.

Le catalyseur de l'invention renferme le fluor.

Les sources de fluor sont bien connues de l'homme du métier. Par exemple, les anions fluorures peuvent être introduits sous forme d'acide fluorhydrique ou de ses sels. Ces sels sont formés avec des métaux alcalins, l'ammonium ou un composé organique. Dans ce dernier cas, le sel est avantageusement formé dans le mélange réactionnel par réaction entre le composé organique et l'acide fluorhydrique. Il est également possible d'utiliser des composés hydrolysables pouvant libérer des anions fluorures dans l'eau, comme le fluorosilicate d'ammonium $(NH_4)_2SiF_6$, le tétrafluorure de silicium $SiF_4$ ou de sodium $Na_2SiF_6$. Le fluor peut être introduit par exempte par imprégnation d'une solution aqueuse d'acide fluorhydrique ou de fluorure d'ammonium.

Le fluor peut être introduit par imprégnation dans le catalyseur à divers niveaux de la préparation et de diverses manières.

D'une façon générale on prépare un mélange appelé précurseur contenant au moins une matrice, de la zéolithe, au moins un élément du groupe VB, et éventuellement au moins un élément choisi parmi les métaux du groupe VIII et du groupe VIB. Le mélange est ou n'est pas mis en forme.

L'imprégnation du mélange (avec au moins une solution contenant au moins un élément promoteur et éventuellement l'halogène ) est de préférence effectuée par la méthode d'imprégnation dite "à sec" bien connue de l'homme du métier. L'imprégnation peut être effectuée en une seule étape par une solution contenant l'ensemble des éléments constitutifs du catalyseur final, ou par une ou plusieurs opérations d'imprégnation par exemple avec excès de solution sur le précurseur calciné.

Il est également possible d'imprégner le catalyseur par au moins une solution contenant tout ou partie d'au moins un élément choisi par les éléments du groupe VIB et du groupe VIII, éventuellement d'au moins un élément promoteur choisi dans le groupe constitué par le bore, le silicium et le phosphore et au moins du fluor.

Dans le cas où le catalyseur contient du bore, une méthode préférée selon l'invention consiste à préparer une solution aqueuse d'au moins un sel de bore tel que le biborate d'ammonium ou le pentaborate d'ammonium en milieu alcalin et en présence d'eau oxygénée et à procéder à une imprégnation dite à sec, dans laquelle on remplit le volume des pores du précurseur par la solution contenant le bore.

Dans le cas où le catalyseur contient du silicium on utilisera de préférence une solution d'un composé du silicium de type silicone.

Dans le cas où le catalyseur contient du bore et du silicium, le dépôt de bore et de silicium peut aussi se faire de manière simultanée en utilisant une solution contenant un sel de bore et un composé du silicium de type silicone. Ainsi, par exemple (et dans le cas préféré où par exemple le précurseur est un catalyseur de type nickel-molybdène-niobium supporté sur un support contenant de la zéolithe et de l'alumine) il est possible d'imprégner ce précurseur par de la solution aqueuse de biborate d'ammonium et de silicone Rhodorsil E1P de la société Rhône Poulenc, de procéder à un séchage par exemple à 80°C, puis d'imprégner par une solution de fluorure d'ammonium, de procéder à un séchage par exemple à 80°C, et de procéder à une calcination par exemple et de façon préférée sous air en lit traversé, par exemple à 500°C pendant 4 heures.

On imprègne le mélange par au moins une solution de fluor avant, après ou simultanément à l'imprégnation par la solution de l'élément promoteur. Il est par exemple possible d'imprégner le catalyseur par une solution de fluorure d'ammonium, de procéder à un séchage par exemple à 80°C, et de procéder à une calcination par exemple et de façon préférée sous air en lit traversé, par exemple à 500°C pendant 4 heures.

D'autres séquences d'imprégnation peuvent être mises en oeuvre pour obtenir le catalyseur de la présente invention.

Dans le cas où les métaux sont introduits en plusieurs imprégnations des sels précurseurs correspondants, une étape de séchage intermédiaire du catalyseur est généralement effectuée à une température généralement comprise entre 60 et 250'C et avantageusement une étape de calcination intermédiaire du catalyseur est généralement effectuée à une température comprise entre 150 et 800 °C, généralement entre 250 et 600 °C.

Généralement, afin de terminer la préparation du catalyseur, on laisse reposer le solide humide sous une atmosphère humide à une température comprise entre 10 et 80°C, puis on sèche le solide humide obtenu à une température comprise entre 60 et 150°C, et enfin on calcine le solide obtenu à une température comprise entre 150 et 800°C, généralement entre 250 et 600 °C.

Un procédé préféré de préparation du catalyseur de la présente invention comprend les étapes suivantes :

a) on sèche et on pèse un solide dénommé le précurseur, renfermant au moins les composés suivants : au moins une matrice, au moins une zéolithe de type structural TON, MTT ou FER, éventuellement préparée en milieu fluorure, de préférence une zéolithe NU-10, EU-13 ou NU-23, éventuellement au moins un élément choisi parmi les éléments du groupe VIB et du groupe VIII, éventuellement au moins un élément promoteur choisi dans le groupe constitué par le bore, le silicium, et le phosphore, au moins du fluor, le tout étant de préférence mis en forme,

b) le solide sec obtenu à l'étape a) est calciné à une température d'au moins 150°C.

c) on imprègne le solide précurseur défini à l'étape b), par une solution contenant au moins un élément du groupe VB, de préférence le niobium,

d) on laisse reposer le solide humide sous une atmosphère humide à une température comprise entre 10 et 120°C,

e) on sèche le solide humide obtenu à l'étape d) à une température comprise entre 60 et 150°C,

Les catalyseurs obtenus par la présente invention sont mise en forme sous la forme de grains de différentes formes et dimensions. Ils sont utilisés en général sous la forme d'extrudés cylindriques ou polylobés tels que bilobés, trilobés, polylobés de forme droite ou torsadée, mais peuvent éventuellement être fabriqués et employés sous la forme de poudre concassées, de tablettes, d'anneaux, de billes, de roues. Ils présentent une surface spécifique mesurée par adsorption d'azote selon la méthode BET (Brunauer, Emmett, Teller, J. Am. Chem. Soc., vol. 60, 309-316 (1938)) comprise entre 50 et 600 m$^2$/g, un volume poreux mesuré par porosimétrie au mercure compris entre 0,2 et 1,5 cm$^3$/g et une distribution en taille de pores pouvant être monomodale, bimodale ou polymodale.

Les catalyseurs de la présente invention peuvent éventuellement être soumis à un traitement de sulfuration permettant de transformer, au moins en partie, les espèces métalliques en sulfure avant leur mise en contact avec la charge à traiter. Ce traitement d'activation par sulfuration est bien connu de l'homme du métier et peut être effectué par toute méthode déjà décrite dans la littérature.

Dans le cas des métaux non nobles, une méthode de sulfuration classique bien connue de l'homme du métier consiste à chauffer en présence ou sous flux d'un mélange hydrogène/hydrogène sulfuré ou encore sous d'hydrogène sulfuré pur, à une température comprise entre 150 et 800°C, de préférence entre 250 et 600°C, généralement dans une zone réactionnelle à lit traversé.

Le catalyseur selon l'invention est utilisé pour la conversion des hydrocarbures, et en particulier dans un procédé de réduction du point d'écoulement tel que défini ci-après.

Les charges qui peuvent être traitées selon le procédé de l'invention sont avantageusement des fractions possédant des points d'écoulement relativement hauts dont on désire diminuer la valeur.

Le procédé selon l'invention peut être utilisé pour traiter des charges variées allant de fractions relativement légères telles que les kérosènes et carburéacteurs jusqu'à des charges possédant des points d'ébullition plus élevés telles que les distillats moyens, les résidus sous vide, les gazoles, les distillats moyens issus du FCC (LCO et HCO) et les résidus d'hydrocraquage.

La charge à traiter est dans la majeure partie des cas une coupe $C_{10}^+$ de point d'ébullition initial supérieur à environ 175 °C, de préférence une coupe lourde à point d'ébullition d'au moins 280°C et avantageusement à point d'ébullition d'au moins 380'C. Le procédé selon l'invention est particulièrement adapté pour traiter des distillats paraffiniques tels que les distillats moyens qui englobent les gazoles, les kérosènes, les carburéacteurs, les distillats sous vide et toutes autres fractions dont le point d'écoulement et la viscosité doivent être adaptés pour rentrer dans le cadre des spécifications

Les charges qui peuvent être traitées selon le procédé de l'invention peuvent contenir des paraffines, des oléfines, des naphtènes, des aromatiques et aussi des hétérocycles et avec une proportion importante de n-paraffines de haut poids moléculaire et de paraffines très peu branchées également de haut poids moléculaire.

La réaction est conduite de façon à ce que le taux des réactions de craquage reste suffisamment faible pour rendre le procédé économiquement viable. Le taux des réactions de craquage est généralement inférieur à 40% poids, de préférence inférieur à 30% et avantageusement à 20%.

Des charges typiques qui peuvent être traitées avantageusement selon l'invention possèdent en général un point d'écoulement au dessus de 0°C. Les produits résultant du traitement selon le procédé ont des points d'écoulement inférieurs à 0°C et de préférence inférieurs à environ -10°C.

Ces charges possèdent généralement des teneurs en n-paraffines et en paraffines très peu branchées, à plus de 10 atomes de carbone et à haut poids moléculaire, souvent supérieures à 30 % et jusqu'à environ 90 %, voire dans certains cas supérieures à 90 % poids. Le procédé est particulièrement intéressant lorsque cette proportion est d'au moins 60 % poids.

On peut citer comme exemples d'autres charges traitables selon l'invention et à titre non limitatif, les bases pour huiles lubrifiantes, les paraffines de synthèse issues du procédé Fischer-Tropsch, les polyalphaoléfines à haut point d'écoulement, les huiles de synthèse etc... Le procédé peut également s'appliquer à d'autres composés contenant une chaîne n-alcane tels que définis précédemment, par exemple des composés n-alkylcycloalcanes, ou comportant au moins un groupe aromatique. Les charges décrites ci-dessus peuvent être additivées d'un ou plusieurs composés soufrés tel que à titre d'exemple non limitatif le diméthyldisulfure (DMDS).

Les conditions opératoires dans lesquelles s'opère le procédé de l'invention sont les suivantes:

- la température de réaction est comprise entre 170 et 500°C et de préférence entre 180 et 470°C, avantageusement 190-450°C ;

- la pression est comprise entre 0,1 et 25 MPa et de préférence entre 1environ et 20 MPa;

- la vitesse volumique horaire (vvh exprimée en volume de charge injectée par unité de volume de catalyseur et par heure) est comprise entre environ 0,05 et environ 100 et de préférence entre environ 0.1 et environ 30 h$^{-1}$.

Le contact entre la charge et le catalyseur est réalisé en présence d'hydrogène. Le taux d'hydrogène utilisé et exprimé en litres d'hydrogène par litre de charge est compris entre 50 et environ 2000 litres d'hydrogène par litre de charge et de préférence entre 100 et 1500 litres d'hydrogène par litre de charge.

La charge à traiter possède de préférence une teneur en composés azotés inférieure à environ 200 ppm poids et de préférence inférieure à 100 ppm poids. La teneur en soufre est inférieure à 1000 ppm poids, de préférence inférieure à 500 ppm et de manière encore plus préférée inférieure à 200 ppm poids. La teneur en métaux de la charge, tels que Ni ou V, est extrêmement réduite, c'est-à-dire inférieure à 50 ppm poids, de manière préférée inférieure à 10 ppm poids et de manière encore plus préférée inférieure à 2 ppm poids.

Les composés obtenus par le procédé selon l'invention sont essentiellement monobranchés, dibranchés et multibranchés et souvent avec des groupes méthyles.

Les exemples qui suivent illustrent l'invention sans toutefois en limiter la portée.

**Exemple 1** : Préparation d'un support contenant une zéolithe NU-10 de type structural TON

Un support de catalyseur d'amélioration du point d'écoulement contenant une zéolithe NU-10 de type structural TON a été fabriqué en grande quantité de façon à pouvoir préparer différents catalyseurs à base du même support. Pour cela on utilise 45,2 % poids d'une zéolithe NU-10 possédant un rapport Si/AI global (mesuré par fluorescence X) de 30,2 et un rapport atomique mesuré par adsorption atomique de Na/AI=0,005, que l'on mélange à 54,8 % poids d'une matrice composée de boehmite tabulaire ultrafine ou gel d'alumine commercialisée sous le nom SB3 par la société Condéa Chemie Gmbh. Ce mélange de poudre a été ensuite mélangé à une solution aqueuse contenant de l'acide nitrique à 66% ( 7% poids d'acide par gramme de gel sec) puis malaxé pendant 15 minutes. A l'issue de ce malaxage, la pâte obtenue est passée à travers une filière ayant des orifices cylindriques de diamètre égal à 1,4 mm. Les extrudés sont ensuite séchés pendant une nuit à 120°C puis calcinés à 550°C pendant 2 heures sous air humide contenant 7,5% volume d'eau. On obtient ainsi des extrudés cylindriques de 1,2 mm de diamètre, ayant une surface spécifique de 215 m$^2$/g, un volume poreux de 0,62 cm$^3$/g et une distribution en taille de pore monomodale centrée sur 10 nm. L'analyse du support par diffraction des rayons X révèle que celui-ci est composé d'alumine gamma cubique de faible cristallinité et de zéolithe NU-10 de type structural TON. Ce support est dénommé C1.

**Exemple 2 :** Préparation de catalyseurs pour l'amélioration du point d'écoulement contenant une zéolithe NU-10 de type structural TON (non conforme à l'invention)

Les extrudés obtenus dans l'exemple 1 sont imprégnés par une solution aqueuse renfermant du biborate d'ammonium de manière à déposer environ 1,6% poids de B2O3. Après maturation à température ambiante dans une atmosphère saturée en eau, les extrudés imprégnés sont séchés pendant une nuit à 120°C puis calcinés à 550°C sous air sec. On obtient un support dopé au bore nommé C1B. Un autre support C1Si a été obtenu par la même procédure que le support dopé C1B mais en remplaçant dans la solution d'imprégnation le précurseur de bore par l'émulsion de silicone Rhodorsil EP1 de manière à déposer 2% poids de SiO$_2$. Enfin, un support C1BSi a été obtenu par la même procédure que les catalyseurs ci-dessus mais en utilisant une solution aqueuse renfermant le biborate d'ammonium et l'émulsion de silicone Rhodorsil EP1 et les mêmes conditions opératoires. On prépare aussi un autre support dopé en ajoutant du fluor par imprégnation à sec d'une solution d'acide fluorhydrique diluée de manière à déposer environ 1% poids de fluor sur le support C1BSi. Après séchage pendant une nuit à 120°C et caicination à 550°C pendant 2 heures sous air sec on obtient le support dopé C1BSiF

Les supports précédemment préparés C1, C1B, C1Si, C1BSi et C1BSiF sont en ensuite imprégnés à sec par une solution de chlorure de platine tétramine [Pt(NH3)4]Cl2, puis de nouveau calcinés sous air à 550°C. La teneur finale en platine des catalyseurs finaux, dénommés Pt-C1, Pt-C1B, Pt-C1Si, Pt-C1BSi et Pt-C1BSiF, ainsi obtenus est d'environ 0,6% poids par rapport à l'ensemble du catalyseur.

Les compositions des catalyseurs ainsi préparés sont indiquées dans le tableau 1.

Tableau 1 :

| Caractéristiques des catalyseurs Pt-C1 | | | | | |
|---|---|---|---|---|---|
| Catalyseur | Pt-C1 | Pt-C1B | Pt-C1Si | Pt-C1BSi | Pt-C1BSiF |
| B$_2$O$_3$(% pds) | 0 | 1,5 | 0 | 1,6 | 1,4 |
| SiO$_2$ (% pds) global | 43,5 | 42,8 | 44,4 | 43,7 | 43,3 |
| F (% pds) | 0 | 0 | 0 | 0 | 0,95 |
| Pt (% poids) | 0,66 | 0,68 | 0,67 | 0,69 | 0,69 |

Tableau 1 :   (suite)

| Caractéristiques des catalyseurs Pt-C1 | | | | | |
|---|---|---|---|---|---|
| Catalyseur | Pt-C1 | Pt-C1B | Pt-C1Si | Pt-C1BSi | Pt-C1BSiF |
| Complément à 100% composé majoritairement de $Al_2O_3$ (% pds) | 55,84 | 55,02 | 54,93 | 54,01 | 53,66 |

**Exemple 3 :** Préparation de catalyseurs pour l'amélioration du point d'écoulement contenant une zéolithe NU-10 de type TON et du niobium (selon l'invention)

Les extrudés de support C1 obtenus dans l'exemple 1 sont imprégnés par une solution aqueuse d'oxalate de niobium $Nb(HC_2O_4)_5$, d'acide oxalique et d'oxalate d'ammonium. La solution aqueuse contenant le niobium est préparée à partir de 1330 ml d'eau dans laquelle on dissous 33g d'acide oxalique, 37,2 g d'oxalate d'ammonium et 92,3 g d'oxalate de niobium. Pour préparer la solution, on dissous dans un premier temps le mélange acide oxalique et oxalate d'ammonium et lorsque la solution est limpide on chauffe la dite solution à 55°C et on ajoute l'oxalate de niobium. Ceci permet de déposer environ 5% poids de Nb sur le catalyseur. On complète ensuite en eau pour obtenir 1330 ml de solution. Le support de l'exemple 1 ci dessus est imprégné par la méthode dite avec excès de solution. Les 1330 ml de solution sont mis en contact avec 380 g de catalyseur. A bout de deux heures on récupère les extrudés. Ceux-ci sont ensuite séchés une nuit à 120°C sous un courant d'air sec.

Le support NbC1 contenant le niobium préparé ci-dessus est imprégné à sec par une solution aqueuse de biborate d'ammonium de manière à déposer environ 1,6% poids de B2O3. Après maturation à température ambiante dans une atmosphère saturée en eau, les extrudés imprégnés sont séchés pendant une nuit à 120°C puis calcinés à 550°C sous air sec. On obtient un support dopé au bore nommé NbC1B. Un autre support NbC1Si a été obtenu par la même procédure que le support dopé NbC1B mais en remplaçant dans la solution d'imprégnation le précurseur de bore par l'émulsion de silicone Rhodorsil EP1 de manière à déposer 2% poids de $SiO_2$. Enfin, un support NbC1BSi a été obtenu par la même procédure que les catalyseurs ci-dessus mais en utilisant une solution aqueuse renfermant le biborate d'ammonium et l'émulsion de silicone Rhodorsil EP1 et les mêmes conditions opératoires. On prépare aussi un autre support dopé en ajoutant du fluor par imprégnation à sec d'une solution d'acide fluorhydrique diluée de manière à déposer environ 1% poids de fluor sur le support NbC1BSi. Après séchage pendant une nuit à 120°C et calcination à 550°C pendant 2 heures sous air sec on obtient le support dopé NbC1BSiF

Les supports précédemment préparés NbC1, NbC1B, NbC1Si, NbC1BSi et NbC1BSiF sont en ensuite imprégnés à sec par une solution de chlorure de platine tétramine [Pt(NH3)4]Cl2, puis de nouveau calcinés sous air à 550°C. La teneur finale en platine des catalyseurs finaux, dénommés NbPt-C1, NbPt-C1B, NbPt-C1Si, NbPt-C1BSi et NbPt-C1BSiF, ainsi obtenus est d'environ 0,6% poids par rapport à l'ensemble du catalyseur.

Les compositions des catalyseurs ainsi préparés sont indiquées dans le tableau 2.

Tableau 2 :

| Caractéristiques des catalyseurs NbPt-C1 | | | | | |
|---|---|---|---|---|---|
| Catalyseur | NbPt-C1 | NbPt-C1 B | NbPt-C1 Si | NbPt-C1 BSi | NbPt-C1 BSiF |
| $Nb_2O_3$ (% pds) | 5,3 | 5,2 | 5,2 | 5,1 | 5,05 |
| $B_2O_3$ (% pds) | 0 | 1,9 | 0 | 1,9 | 1,9 |
| $SiO_2$ (% pds) global | 41,2 | 40,4 | 42,0 | 41,4 | 40,9 |
| F (% pds) | 0 | 0 | 0 | 0 | 1,09 |
| Pt (% poids) | 0,67 | 0,67 | 0,67 | 0,66 | 0,66 |
| Complément à 100% composé majoritairement de $Al_2O_3$ (% pds) | 52,9 | 51,9 | 52,2 | 51,0 | 52,1 |

**Exemple 4 :** Comparaison des catalyseurs contenant le support $C_1$ en amélioration du point d'écoulement d'un résidu d'hydrocraquage

Les catalyseurs ont été évalués sur un résidu d'hydrocraquage issu d'un distillat sous vide pour préparer une huile de base. Les caractéristiques de la charge utilisée sont reportées ci-après :

| | |
|---|---|
| Teneur en soufre (ppm poids) | 21 |
| Teneur en azote (ppm poids) | 3 |
| Point d'écoulement (°C) | + 38 |
| Point initial | 321 |
| 10% | 385 |
| 50% | 449 |
| 90% | 531 |
| Point final | 556 |

Le catalyseur est préalablement réduit sous hydrogène à 450°C avant le test catalytique in situ dans le réacteur. Cette réduction s'effectue par paliers. Elle consiste en un palier à 150°C de 2 heures, puis une montée en température jusqu'à 450°C à la vitesse de 1°C/min, puis un palier de 2 heures à 450°C. Durant ce protocole de réduction, le débit d'hydrogène est de 1000 litres d'$H_2$ par litre de catalyseur.

Les conditions opératoires dans lesquelles sont réalisées les tests catalytiques sont les suivantes, une pression totale de 12 MPa, une vitesse volumique horaire 1,2 $h^{-1}$ et un débit d'hydrogène de 1000 litres d'$H_2$ par litre de charge. Les températures de réaction pour obtenir 40% de conversion nette en composés 380°C$^{moins}$ sont reportées dans le tableau 3, 380°C$^{moins}$ représentant la fraction distillée à une température inférieure ou égale à 380°C.

La conversion nette est exprimée comme suit :

$$\text{Conversion nette} = (\% \text{ poids de } 380^{moins} \text{ dans les effluents} - \% \text{ poids de } 380^{moins} \text{ dans la charge})/(\% \text{ poids de } 380^{moins} \text{ dans la charge})$$

Tableau 3 :

| Température de conversion pour obtenir 40% de conversion nette | | | | | |
|---|---|---|---|---|---|
| | **Pt-C1** | **Pt-C1B** | **Pt-C1Si** | **Pt-C1BSi** | **Pt-C1BSiF** |
| T°C | 380 | 378 | 377 | 374 | 371 |
| | **NbPt-C1** | **NbPt-C1B** | **NbPt-C1Si** | **NbPt-C1BSi** | **NbPt- C1BSiF** |
| T°C | 378 | 377 | 376 | 372 | 369 |

Le tableau 3 met en évidence que les catalyseurs selon l'invention contenant du niobium sont plus actifs que les catalyseurs n'en contenant pas.

Dans le tableau 4 figurent les rendements en huiles de base pour un point d'écoulement de -15°C.

Tableau 4 :

| Rendement en huile (% poids) pour un point d'écoulement de -15°C | | | | | |
|---|---|---|---|---|---|
| | **PtC1** | **PtC1B** | **PtC1Si** | **PtC1BSi** | **PtC1BSiF** |
| Rendement huile (%poids) | 82 | 83 | 84 | 87 | 88 |
| | **NbPtC1** | **NbPtC1B** | **NbPtC1Si** | **NbPtC1BSi** | **NbPtC1BSiF** |
| Rendement huile (%poids) | 83 | 85 | 85 | 88 | 89 |

Le tableau 4 met en évidence que les catalyseurs selon l'invention contenant du niobium conduisent à des rendements en huile supérieur au catalyseur non dopé par le niobium.

**Exemple 5 :** Préparation d'un support contenant une zéolithe ZSM-23 de type structural MTT

Un support de catalyseur d'amélioration du point d'écoulement contenant une zéolithe ZSM-23 de type structural MTT a été fabriqué en grande quantité de façon à pouvoir préparer différents catalyseurs à base du même support. Pour cela on utilise 40,2 % poids d'une zéolithe ZSM-23 possédant un rapport Si/Al global (mesuré par fluorescence X) de 35,2 et un rapport atomique mesuré par adsorption atomique de Na/Al=0,004, que l'on mélange à 59,8 % poids d'une matrice composée de boehmite tabulaire ultrafine ou gel d'alumine commercialisée sous le nom SB3 par la société Condéa Chemie Gmbh. Ce mélange de poudre a été ensuite mélangé à une solution aqueuse contenant de l'acide nitrique à 66% (7% poids d'acide par gramme de gel sec) puis malaxé pendant 15 minutes. A l'issue de ce malaxage, la pâte obtenue est passée à travers une filière ayant des orifices cylindriques de diamètre égal à 1,4 mm. Les extrudés sont ensuite séchés pendant une nuit à 120°C puis calcinés à 550°C pendant 2 heures sous air humide contenant 7,5% volume d'eau. On obtient ainsi des extrudés cylindriques de 1,2 mm de diamètre. ayant une surface spécifique de 290 m$^2$/g et une distribution en taille de pore monomodale centrée sur 11 nm. L'analyse de la matrice par la diffraction des rayons X révèle que celle ci est composée d'alumine gamma cubique de faible cristallinité et de zéolithe ZSM-23 de type structural MTT. Ce support est dénommé C2.

**Exemple 6 :** Préparation de catalyseurs pour l'amélioration du point d'écoulement contenant une zéolithe ZSM-23 de type MTT (non conforme à l'invention)

Les extrudés de support C2 obtenus dans l'exemple 5 sont imprégnés par une solution aqueuse renfermant du biborate d'ammonium. Après maturation à température ambiante dans une atmosphère saturée en eau, les extrudés imprégnés sont séchés pendant une nuit à 120°C puis calcinés à 550°C sous air sec. On obtient un support dopé au bore nommé C2B. Un autre support C2Si a été obtenu par la même procédure que le support dopé C2B mais en remplaçant dans la solution d'imprégnation le précurseur de bore par l'émulsion de silicone Rhodorsil EP1. Enfin, un support C2BSi a été obtenu par !a même procédure que les catalyseurs ci-dessus mais en utilisant une solution aqueuse renfermant le biborate d'ammonium et l'émulsion de silicone Rhodorsil EP1 et les mêmes conditions opératoires. On prépare aussi un autre support dopé en ajoutant du fluor par imprégnation à sec d'une solution d'acide fluorhydrique diluée de manière à déposer environ 1% poids de fluor sur le support C2BSi. Après séchage pendant une nuit à 120°C et calcination à 550°C pendant 2 heures sous air sec on obtient le support dopé C2BSIF.

Les supports précédemment préparés C2, C2B, C2Si, C2BSi et C2BSiF sont en ensuite imprégnés à sec par une solution de chlorure de platine tétramine [Pt(NH3)4]Cl2, puis de nouveau calcinés sous air à 550°C. La teneur finale en platine des catalyseurs finaux, dénommés Pt-C2, Pt-C2B, Pt-C2Si, Pt-C2BSi et Pt-C2BSiF, ainsi obtenus est d'environ 0.6% poids par rapport à l'ensemble du catalyseur.

Les compositions des catalyseurs ainsi préparés sont indiquées dans le tableau 5.

Tableau 5 :

| Caractéristiques des catalyseurs Pt-C2 | | | | | |
|---|---|---|---|---|---|
| Catalyseur | Pt-C2 | Pt-C2B | Pt-C2Si | Pt-C2BSi | Pt-C2BSiF |
| B$_2$O$_3$ (% pds) | 0 | 1,8 | 0 | 1,3 | 1,7 |
| SiO$_2$ (% pds) global | 38,8 | 38,1 | 39,7 | 39,2 | 38,8 |
| F (% pds) | 0 | 0 | 0 | 0 | 0,92 |
| Pt (% poids) | 0.70 | 0,66 | 0,68 | 0,65 | 0,67 |
| Complément à 100% composé majoritairement de Al$_2$O$_3$ (% pds) | 60,5 | 59,44 | 59,62 | 58,85 | 57,91 |

**Exemple 7 :** Préparation de catalyseurs pour l'amélioration du point d'écoulement contenant une zéolithe ZSM-23 de type MTT et du niobium (selon l'invention)

Les extrudés de support C2 obtenus dans l'exemple 5 sont imprégnés par une solution aqueuse d'oxalate de niobium Nb(HC$_2$O$_4$)$_5$, d'acide oxalique et d'oxalate d'ammonium. La solution aqueuse contenant le niobium est préparée à partir de 1330 ml d'eau dans laquelle on dissous 33g d'acide oxalique, 37,2 g d'oxalate d'ammonium et 92,3 g d'oxalate de niobium. Pour préparer la solution, on dissous dans un premier temps le mélange acide oxalique et oxalate d'ammonium et lorsque la solution est limpide on chauffe la dite solution à 55°C et on ajoute l'oxalate de niobium. On complète ensuite en eau pour obtenir 1330 ml de solution. Le support de l'exemple 5 ci dessus est imprégné par la méthode dite avec excès de solution. Les 1330 ml de solution sont mis en contact avec 380 g de catalyseur. Ceci permet de déposer environ 5% poids de Nb sur le catalyseur. A bout de deux heures on récupère les extrudés. Ceux-ci sont ensuite séchés une nuit à 120°C sous un courant d'air sec.

Les extrudés NbC2 obtenus ci dessus contenant la zéolithe ZSM23 et du niobium, sont imprégnés par une solution aqueuse renfermant du biborate d'ammonium. Après maturation à température ambiante dans une atmosphère saturée en eau, les extrudés imprégnés sont séchés pendant une nuit à 120°C puis calcinés à 550°C sous air sec. On obtient un support dopé au bore nommé NbC2B. Un autre support NbC2Si a été obtenu par la même procédure que le support dopé NbC2B mais en remplaçant dans la solution d'imprégnation le précurseur de bore par l'émulsion de silicone Rhodorsil EP1. Enfin, un support NbC2BSi a été obtenu par la même procédure que les catalyseurs ci-dessus mais en utilisant une solution aqueuse renfermant le biborate d'ammonium et l'émulsion de silicone Rhodorsil EP1 et les mêmes conditions opératoires. On prépare aussi un autre support dopé en ajoutant du fluor par imprégnation à sec d'une solution d'acide fluorhydrique diluée de manière à déposer environ 1 % poids de fluor sur le support NbC2BSi. Après séchage pendant une nuit à 120°C et calcination à 550°C pendant 2 heures sous air sec on obtient le support dopé NbC2BSiF.

Les supports précédemment préparés NbC2, NbC2B, NbC2Si, NbC2BSi et NbC2BSiF sont en ensuite imprégnés à sec par une solution de chlorure de platine tétramine [Pt(NH3)4]Cl2, puis de nouveau calcinés sous air à 550°C. La teneur finale en platine des catalyseurs finaux, dénommés NbPt-C2, NbPt-C2B, NbPt-C2Si, NbPt-C2BSi et NbPt-C2BSiF, ainsi obtenus est d'environ 0,6% poids par rapport à l'ensemble du catalyseur.

Les compositions des catalyseurs NbPtC2 ainsi préparés sont indiquées dans le tableau 6.

Tableau 6 :

| Caractéristiques des catalyseurs NbPt-C2 | | | | | |
|---|---|---|---|---|---|
| Catalyseur | NbPt-C2 | NbPt-C2 B | NbPt-C2 Si | NbPt-C2 BSi | NbPt-C2 BSiF |
| $Nb_2O_5$ (% pds) | 4,85 | 4,75 | 4,8 | 4,7 | 4,6 |
| $B_2O_3$ (% pds) | 0 | 1,9 | 0 | 1,9 | 1,9 |
| $SiO_2$ (% pds) global | 36,9 | 37,3 | 37,8 | 37,3 | 36,8 |
| F (% pds) | 0 | 0 | 0 | 0 | 1,07 |
| Pt (% poids) | 0,67 | 0,67 | 0,67 | 0,66 | 0,68 |
| Complément à 100% composé majoritairement de $Al_2O_3$ (% pds) | 57,6 | 56,5 | 56,8 | 55,5 | 54,9 |

**Exemple 8 :** Comparaison des catalyseurs contenant le support $C_2$ en amélioration du point d'écoulement d'un résidu d'hydrocraquage

Les catalyseurs ont été évalués sur un résidu d'hydrocraquage issu d'un distillat sous vide pour préparer une huile de base.

La charge utilisée est celle décrite dans l'exemple 4.

Le catalyseur est préalablement réduit sous hydrogène à 450°C avant le test catalytique in situ dans le réacteur. Cette réduction s'effectue par paliers. Elle consiste en un palier à 150°C de 2 heures, puis une montée en température jusqu'à 450°C à la vitesse de 1°C/min, puis un palier de 2 heures à 450°C. Durant ce protocole de réduction, le débit d'hydrogène est de 1000 litres d'$H_2$ par litre de catalyseur.

Les conditions opératoires dans lesquelles sont réalisées les tests catalytiques sont les suivantes, une pression totale de 12 MPa, une vitesse volumique horaire 1,2 h$^{-1}$ et un débit d'hydrogène de 1000 litres d'$H_2$ par litre de charge. Les températures de réaction pour obtenir 40% de conversion nette en composés 380$^{moins}$ sont reportées dans le tableau 7.

La conversion nette est définie comme dans l'exemple 3.

Tableau 7 :

| | Température de conversion pour obtenir 40% de conversion nette | | | | |
|---|---|---|---|---|---|
| | Pt-C2 | Pt-C2B | Pt-C2Si | Pt-C2BSi | Pt-C2BSiF |
| T°C | 376 | 375 | 374 | 371 | 369 |
| | NbPt-C2 | NbPt-C2B | NbPt-C2Si | NbPt-C2BSi | NbPtC2BSiF |
| T°C | 374 | 374 | 372 | 370 | 367 |

Le tableau 7 met en évidence que les catalyseurs selon l'invention NbPt-C2B, NbPt-C2Si, NbPt-C2BSi et NbPt-C2BSiF sont plus actifs que les catalyseurs correspondants ne contenant du niobium.

Dans le tableau 8 figurent les rendements en huiles de base pour un point d'écoulement de -15°C.

Tableau 8 :

| Rendement en huile (% poids) pour un point d'écoulement de -15°C | | | | | |
|---|---|---|---|---|---|
| | **Pt-C2** | **Pt-C2B** | **Pt-C2Si** | **Pt-C2BSi** | **Pt-C2BSiF** |
| Rendement huile (%poids) | 80 | 82 | 83 | 85 | 87 |
| | **NbPt-C2** | **NbPt-C2B** | **NbPt-C2Si** | **NbPt-C2BSi** | **NbPtC2BSiF** |
| Rendement huile (%poids) | 82 | 83 | 84 | 86 | 89 |

Le tableau 8 met en évidence que les catalyseurs selon l'invention NbPt-C2B, NbPt-C2Si, NbPt-C2BSi et NbPt-C2BSiF conduisent à des rendements en huile supérieur aux catalyseurs correspondants ne contenant de niobium.

**Exemple 9 :** Préparation d'un support contenant une zéolithe ferrierite de type structural FER

Un support de catalyseur d'amélioration du point d'écoulement contenant une zéolithe ferrierite de type structural a été fabriqué en grande quantité de façon à pouvoir préparer différents catalyseurs à base du même support. Pour cela on utilise 49,6 % poids d'une zéolithe ferrierite possédant un rapport Si/Al global (mesuré par fluorescence X) de 9,9 et un rapport atomique mesuré par adsorption atomique de Na/Al=0,006, que l'on mélange à 50,4 % poids d'une matrice composée de boehmite tabulaire ultrafine ou gel d'alumine commercialisée sous le nom SB3 par la société Condéa Chemie Gmbh. Ce mélange de poudre a été ensuite mélangé à une solution aqueuse contenant de l'acide nitrique à 66% (7% poids d'acide par gramme de gel sec) puis malaxé pendant 15 minutes. A l'issue de ce malaxage, la pâte obtenue est passée à travers une filière ayant des orifices cylindriques de diamètre égal à 1,4 mm. Les extrudés sont ensuite séchés pendant une nuit à 120°C puis calcinés à 550°C pendant 2 heures sous air humide contenant 7,5% volume d'eau. On obtient ainsi des extrudés cylindriques de 1,2 mm de diamètre, ayant une surface spécifique de 220 m$^2$/g, un volume poreux de 0,4 cm$^3$/g et une distribution en taille de pore monomodale centrée sur 10 nm. L'analyse de la matrice par la diffraction des rayons X révèle que celle ci est composée d'alumine gamma cubique de faible cristallinité et de zéolithe ferrierite de type structural FER. Ce support est dénommé C3.

**Exemple 10 :** Préparation de catalyseurs pour l'amélioration du point d'écoulement contenant une zéolithe ferrierite de type FER (non conforme à l'invention)

Les extrudés de support C3 obtenus dans l'exemple 9 sont imprégnés par une solution aqueuse renfermant du biborate d'ammonium. Après maturation à température ambiante dans une atmosphère saturée en eau, les extrudés imprégnés sont séchés pendant une nuit à 120°C puis calcinés à 550°C sous air sec. On obtient un support dopé au bore nommé C3B. Un autre support C3Si a été obtenu par la même procédure que le support dopé C3B mais en remplaçant dans la solution d'imprégnation le précurseur de bore par l'émulsion de silicone Rhodorsil EP1. Enfin, un support C3BSi a été obtenu par la même procédure que les catalyseurs ci-dessus mais en utilisant une solution aqueuse renfermant le biborate d'ammonium et l'émulsion de silicone Rhodorsil EP1 et les mêmes conditions opératoires. On prépare aussi un autre support dopé en ajoutant du fluor par imprégnation à sec d'une solution d'acide fluorhydrique diluée de manière à déposer environ 1% poids de fluor sur le support C3BSi. Après séchage pendant une nuit à 120°C et calcination à 550°C pendant 2 heures sous air sec on obtient le support dopé C3BSiF

Les supports précédemment préparés C3, C3B, C3Si, C3BSi et C3BSiF sont en ensuite imprégnés à sec par une solution de chlorure de platine tétramine [Pt(NH3)4]Cl2, puis de nouveau calcinés sous air à 550°C. La teneur finale en platine des catalyseurs finaux, dénommés Pt-C3, Pt-C3B, Pt-C3Si, Pt-C3BSi et Pt-C3BSiF, ainsi obtenus est d'environ 0,6% poids par rapport à l'ensemble du catalyseur.

Les compositions des catalyseurs ainsi préparés sont indiquées dans le tableau 9.

Tableau 9 :

| Caractéristiques des catalyseurs Pt-C3 | | | | | |
|---|---|---|---|---|---|
| Catalyseur | Pt-C3 | Pt-C3B | Pt-C3Si | Pt-C3BSi | Pt-C3BSiF |
| B$_2$O$_3$ (% pds) | 0 | 1,5 | 0 | 1,6 | 1,5 |

Tableau 9 :   (suite)

| Caractéristiques des catalyseurs Pt-C3 | | | | | |
|---|---|---|---|---|---|
| Catalyseur | Pt-C3 | Pt-C3B | Pt-C3Si | Pt-C3BSi | Pt-C3BSiF |
| $SiO_2$ (% pds) global | 44.8 | 44,1 | 45,7 | 45,0 | 44,5 |
| F (% pds) | 0 | 0 | 0 | 0 | 0,93 |
| Pt (% poids) | 0.65 | 0,68 | 0,69 | 0,63 | 0,71 |
| Complement à 100% composé majoritairement de $Al_2O_3$ (% pds) | 54,55 | 53,72 | 53,61 | 52,77 | 52,36 |

**Exemple 11 :** Préparation de catalyseurs pour l'amélioration du point d'écoulement contenant une zéolithe ferrierite de type FER et du niobium (selon l'invention)

Les extrudés de support C3 obtenus dans l'exemple 9 sont imprégnés par une solution aqueuse d'oxalate de niobium $Nb(HC_2O_4)_5$, d'acide oxalique et d'oxalate d'ammonium. La solution aqueuse contenant le niobium est préparée à partir de 1330 ml d'eau dans laquelle on dissous 33g d'acide oxalique, 37,2 g d'oxalate d'ammonium et 92,3 g d'oxalate de niobium. Pour préparer la solution, on dissous dans un premier temps le mélange acide oxalique et oxalate d'ammonium et lorsque la solution est limpide on chauffe la dite solution à 55°C et on ajoute l'oxalate de niobium. On complète ensuite en eau pour obtenir 1330 ml de solution. Le support de l'exemple 9 ci dessus est imprégné par la méthode dite avec excès de solution. Les 1330 ml de solution sont mis en contact avec 380 g de catalyseur. Ceci permet de déposer environ 5% poids de Nb sur le catalyseur. A bout de deux heures on récupère les extrudés. Ceux-ci sont ensuite séchés une nuit à 120°C sous un courant d'air sec.

Les extrudés NbC3 obtenus ci dessus contenant la zéolithe FER et du niobium, sont imprégnés d'une solution aqueuse renfermant du biborate d'ammonium. Après maturation à température ambiante dans une atmosphère saturée en eau, les extrudés imprégnés sont séchés pendant une nuit à 120'C puis calcinés à 550°C sous air sec. On obtient un support dopé au bore nommé NbC3B. Un autre support NbC3Si a été obtenu par la même procédure que le support dopé NbC3B mais en remplaçant dans la solution d'imprégnation le précurseur de bore par l'émulsion de silicone Rhodorsil EP1. Enfin, un support NbC3BSi a été obtenu par la même procédure que les catalyseurs ci-dessus mais en utilisant une solution aqueuse renfermant le biborate d'ammonium et l'émulsion de silicone Rhodorsil EP1 et les mêmes conditions opératoires. On prépare aussi un autre support dopé en ajoutant du fluor par imprégnation à sec d'une solution d'acide fluorhydrique diluée de manière à déposer environ 1% poids de fluor sur le support NbC3BSi. Après séchage pendant une nuit à 120°C et calcination à 550°C pendant 2 heures sous air sec on obtient le support dopé NbC3BSiF.

Les supports précédemment oréparés NbC3. NbC3B, NbC3Si, NbC3BSi et NbC3BSiF sont en ensuite imprégnés a sec par une solution de chlorure de platine tétramine [Pt(NH3)4]Cl2, puis de nouveau calcinés sous air à 550°C. La teneur finale en platine des catalyseurs finaux, dénommés NbPt-C3, NbPt-C3B, NbPt-C3Si, NbPt-C3BSi et NbPt-C3BSiF, ainsi obtenus est d'environ 0,6% poids par rapport à l'ensemble du catalyseur.

Les compositions des catalyseurs ainsi préparés sont indiquées dans le tableau 10.

Tableau 10 :

| Caractéristiques des catalyseurs NbPt-C3 | | | | | |
|---|---|---|---|---|---|
| Catalyseur | NbPt-C3 | NbPt-C3 B | NbPt-C3 Si | NbPt-C3 BSi | NbPt-C3 BSiF |
| $Nb_2O_5$(% pds) | 4,96 | 4,85 | 4,9 | 4,8 | 4,7 |
| $B_2O_3$(% pds) | 0 | 1,9 | 0 | 1,9 | 1,9 |
| SiO2 (% pds) global | 42,6 | 41,7 | 43,4 | 42,2 | 42,2 |
| F (% pds) | 0 | 0 | 0 | 0 | 1,09 |
| Pt (% poids) | 0,67 | 0,67 | 0,67 | 0,66 | 0,66 |
| Complément à 100% composé majoritairement de $Al_2O_3$ (% pds) | 51,8 | 50,8 | 51,1 | 50,0 | 49,5 |

**Exemple 12 :** Comparaison des catalyseurs contenant le support C3 en amélioration du point d'écoulement d'un résidu d'hydrocraquage

Les catalyseurs ont été évalués sur un résidu d'hydrocraquage issu d'un distillat sous vide pour préparer une huile de base.

La charge utilisée est celle décrite dans l'exemple 4.

Le catalyseur est préalablement réduit sous hydrogène à 450°C avant le test catalytique in situ dans le réacteur. Cette réduction s'effectue par paliers. Elle consiste en un palier à 150°C de 2 heures, puis une montée en température jusqu'à 450°C à la vitesse de 1°C/min, puis un palier de 2 heures à 450°C. Durant ce protocole de réduction, le débit d'hydrogène est de 1000 litres d'$H_2$ par litre de catalyseur.

Les conditions opératoires dans lesquelles sont réalisées les tests catalytiques sont les suivantes, une pression totale de 12 MPa, une vitesse volumique horaire 1,2 $h^{-1}$ et un débit d'hydrogène de 1000 litres d'$H_2$ par litre de charge. Les températures de réaction pour obtenir 40% de conversion nette en composés $380^{moins}$ sont reportées dans le tableau 11.

La conversion nette est définie comme dans l'exemple 3.

Tableau 11 :

| Température de conversion pour obtenir 40% de conversion nette | | | | | |
|---|---|---|---|---|---|
| | **Pt-C3** | **Pt-C3B** | **Pt-C3Si** | **Pt-C3BSi** | **Pt-C3BSiF** |
| **T°C** | 350 | 347 | 344 | 344 | 341 |
| | **NbPt-C3** | **NbPt-C3B** | **NbPt-C3Si** | **NbPt-C3BSi** | **NbPtC3BSiF** |
| **T°C** | 348 | 346 | 342 | 341 | 339 |

Le tableau 11 met en évidence que les catalyseurs selon l'invention NbPt-C3B, NbPt-C3Si, NbPt-C3BSi et NbPt-C3BSiF sont plus actifs que le catalyseur non dopé Pt-C3.

Dans le tableau 12 figurent les rendements en huiles de base pour un point d'écoulement de -15°C.

Tableau 12 :

| Rendement en huile (% poids) pour un point d'écoulement de -15°C | | | | | |
|---|---|---|---|---|---|
| | **Pt-C3** | **Pt-C3B** | **Pt-C3Si** | **Pt-C3BSi** | **Pt-C3BSiF** |
| Rendement huile (%poids) | 67 | 67,5 | 68 | 71 | 72 |
| | **NbPt-C3** | **NbPt-C3B** | **NbPt-C3Si** | **NbPt-C3BSi** | **NbPtC3BSiF** |
| Rendement huile (%poids) | 69 | 69 | 70 | 73 | 74 |

Le tableau 12 en évidence que les catalyseurs selon l'invention NbPt-C3, NbPt-C3Si, NbPt-C3BSi et NbPt-C3BSiF conduisent à des rendements en huile supérieurs au catalyseur non dopé Pt-C3.

**Revendications**

1. Catalyseur comprenant au moins une matrice amorphe ou mal cristallisée de type oxyde, au moins un élément du groupe VB, au moins une zéolithe de type structural TON, MTT ou FER et au moins du fluor.

2. Catalyseur selon la revendications 1 dans lequel la zéolithe est synthétisée en milieu fluorure.

3. Catalyseur selon la revendication 1 ou 2 dans lequel la zéolithe est une zéolithe NU-10, EU-13 ou NU-23.

4. Catalyseur selon l'une des revendications 1 à 3, comprenant en outre au moins un élément promoteur choisi dans le groupe constitué par le bore, le silicium, et le phosphore.

5. Catalyseur selon l'une des revendications 1 à 4 dans lequel l'élément du groupe VB est le niobium.

6. Catalyseur selon l'une des revendications 1 à 5 comprenant en outre au moins un élément choisi parmi les éléments du groupe VIB et du groupe VIII.

**7.** Catalyseur selon l'une des revendications 1 à 6 renfermant en % poids par rapport à la masse totale du catalyseur:

- 0,1 à 99,8% d'au moins une zéolithe de type structural TON, MTT ou FER comme définis précédemment.
- 0,1 à 99,7% d'au moins une matrice minérale poreuse amorphe ou mal cristallisée de type oxyde,
- 0,1 à 60% d'au moins un élément choisi parmi le groupe VB
- de 0 à 60% d'au moins un élément choisi parmi les éléments du groupe VIB et du groupe VIII
- de 0 à 20% d'au moins un élément promoteur choisi parmi les éléments du groupe constitué par le phosphore, le bore et le silicium,
- de 0,1 à 15% de fluor.

**8.** Procédé de préparation d'un catalyseur selon l'une des revendications 1 à 7 dans lequel :

a) on sèche et on pèse un solide dénommé le précurseur, renfermant au moins les composés suivants : au moins une matrice, au moins une zéolithe de type structural TON, MTT ou FER, au moins du fluor, éventuellement au moins un élément choisi parmi les éléments du groupe VIB et du groupe VIII, éventuellement au moins un élément promoteur choisi dans le groupe constitué par le bore, le silicium, et le phosphore, le tout étant de préférence mis en forme,

b) le solide sec obtenu à l'étape a) est calciné à une température d'au moins 150°C,

c) on imprègne le solide précurseur défini à l'étape b), par une solution contenant au moins un élément du groupe VB,

d) on laisse reposer le solide humide sous une atmosphère humide à une température comprise entre 10 et 120°C,

e) on sèche le solide humide obtenu à l'étape d) à une température comprise entre 60 et 150°C,

**9.** Procédé de préparation selon la revendication 8, dans lequel on imprègne le catalyseur par au moins une solution contenant tout ou partie d'au moins un élément choisi par les éléments du groupe VIB et du groupe VIII, au moins du fluor, éventuellement d'au moins un élément promoteur choisi dans le groupe constitué par le bore, le silicium et le phosphore.

**10.** Procédé de préparation d'un catalyseur selon l'une des revendications 8 ou 9 dans lequel au moins une calcination est effectuée à l'issue de l'une quelconque des étapes de la préparation, à une température d'au moins 150°C.

**11.** Procédé de préparation selon l'une des revendications 8 à 10 dans lequel on procède à la sulfuration du catalyseur sous flux d'un mélange hydrogène/hydrogène sulfuré ou encore sous hydrogène sulfuré pur, à une température comprise entre 150 et 800°C.

**12.** Procédé de réduction du point d'écoulement de charges hydrocarbonées en présence d'un catalyseur comprenant au moins une matrice amorphe ou mal cristallisée de type oxyde, au moins un élément du groupe VB, et au moins une zéolithe de type structural TON, MTT ou FER, et au moins du fluor.

**13.** Procédé selon la revendication 12 dans lequel le catalyseur comprend en outre au moins un élément choisi parmi les éléments du groupe VIB et du groupe VIII.

**14.** Procédé selon l'une des revendications 12 ou 13 dans lequel le catalyseur comprend en outre au moins un élément choisi dans le groupe constitué par le bore, le silicium ou le phosphore.

**15.** Procédé de réduction du point d'écoulement de charges hydrocarbonées en présence d'un catalyseur selon la revendication 7.

**16.** Procédé selon l'une des revendications 12 à 15 opéré à une température comprise entre 170°C et 500°C, une pression comprise entre 1 et 25 MPa, et avec une vitesse volumique horaire comprise entre 0,05 et 100, en présence d'hydrogène à raison de 50 à 2000 litres d'hydrogène par litre de charge.

**Patentansprüche**

1. Katalysator, der wenigstens eine amorphe oder schlecht kristallisierte Matrix vom Oxidtyp, wenigstens ein Element der Gruppe VB, wenigstens einen Zeolith vom Strukturtyp TON, MTT oder FER und wenigstens Fluor umfasst.

2. Katalysator nach Anspruch 1, bei dem der Zeolith im Fluoridmilieu synthetisiert ist.

3. Katalysator nach Anspruch 1 oder 2, bei dem der Zeolith ein NU-10-, EU-13-oder NU-23-Zeolith ist.

4. Katalysator nach einem der Ansprüche 1 bis 3, der außerdem wenigstens ein Promotorelement, gewählt aus der durch Bor, Silizium und Phosphor gebildeten Gruppe umfasst.

5. Katalysator nach einem der Ansprüche 1 bis 4, bei dem das Element der Gruppe VB Niob ist.

6. Katalysator nach einem der Ansprüche 1 bis 5, der außerdem wenigstens ein Element, gewählt unter den Elementen der Gruppe VIB und der Gruppe VIII umfasst.

7. Katalysator nach einem der Ansprüche 1 bis 6, der in Gewichtsprozent im Verhältnis zur Gesamtmasse des Katalysators einschließt:

   - 0,1 bis 99,8% wenigstens eines Zeolithen vom Strukturtyp TON, MTT oder FER wie oben definiert,

   - 0,1 bis 99,7% wenigstens einer mineralischen, porösen, amorphen oder schlecht kristallisierten Matrix vom Oxidtyp,

   - 0,1 bis 60% wenigstens eines Elements gewählt aus der Gruppe VB,

   - von 0 bis 60% wenigstens eines Elements gewählt aus den Elementen der Gruppe VIB und der Gruppe VIII,

   - von 0 bis 20% wenigstens eines Promotorelements, gewählt aus den Elementen der durch Bor, Silizium und Phosphor gebildeten Gruppe,

   - von 0,1 bis 15% Fluor.

8. Herstellungsverfahren eines Katalysators nach einem der Ansprüche 1 bis 7, bei dem:

   a) man einen Vorläufer genannten Feststoff trocknet und abwiegt, der wenigstens die folgenden Bestandteile einschließt: wenigstens eine Matrix, wenigstens einen Zeolith vom Strukturtyp TON, MTT oder FER, wenigstens Fluor, gegebenenfalls wenigstens ein Elements, gewählt aus der Gruppe VIB und der Gruppe VIII, gegebenenfalls wenigstens ein Promotorelement, gewählt aus der durch Bor, Silizium und Phosphor gebildeten Gruppe, wobei das Ganze vorzugsweise geformt ist

   b) der in Stufe a) erhaltenen Trockenfeststoff bei einer Temperatur von wenigstens 150°C kalziniert wird,

   c) man den in Stufe b) definierten Vorläuferfeststoff durch eine Lösung imprägniert, die wenigstens ein Element der Gruppe VB enthält,

   d) man den feuchten Feststoff unter feuchter Atmosphäre bei einer Temperatur zwischen 10 und 120°C ruhen lässt,

   e) man den bei Stufe d) erhaltenen feuchten Feststoff bei einer Temperatur zwischen 60 und 150°C trocknet.

9. Herstellungsverfahren nach Anspruch 8, bei dem man den Katalysator durch wenigstens eine Lösung imprägniert, die ganz oder teilweise wenigstens ein Element, gewählt unter den Elementen der Gruppe VIB und der Gruppe VIII, wenigstens Fluor, gegebenenfalls wenigstens ein Promotorelement, gewählt aus den Elementen der durch Bor, Silizium und Phosphor gebildeten Gruppe, enthält.

10. Herstellungsverfahren eines Katalysators nach einem der Ansprüche 8 oder 9, bei dem wenigstens eine Kalzinie-

**EP 0 967 013 B1**

rung aus irgendeiner der Herstellungsstufen bei einer Temperatur von wenigstens 150°C durchgeführt wird.

**11.** Herstellungsverfahren nach einem der Ansprüche 8 bis 10, bei dem man die Schwefelung des Katalysators unter Strom eines Gemischs Wasserstoff/Schwefelwasserstoff oder auch unter reinem Schwefelwasserstoff bei einer Temperatur zwischen 150 und 800°C durchführt.

**12.** Verfahren zur Verminderung des Stockpunktes von Kohlenwasserstoffbeschickungen in Gegenwart eines Katalysators, der wenigstens eine amorphe oder schlecht kristallisierte Matrix vom Oxidtyp, wenigstens ein Element der Gruppe VB, wenigstens einen Zeolith vom Strukturtyp TON, MTT oder FER und wenigstens Fluor umfasst.

**13.** Verfahren nach Anspruch 12, bei dem der Katalysator im übrigen wenigstens ein Element, gewählt unter den Elementen der Gruppe VIB und der Gruppe VIII umfasst.

**14.** Verfahren nach einem der Ansprüche 12 oder 13,bei dem der Katalysator außerdem wenigstens ein Element, gewählt aus der durch Bor, Silizium und Phosphor gebildeten Gruppe umfasst.

**15.** Verfahren zur Verminderung des Stockpunktes von Kohlenwasserstoffbeschickungen in Gegenwart eines Katalysators nach Anspruch 7.

**16.** Verfahren nach einem der Ansprüche 12 bis 15, betrieben bei einer Temperatur zwischen 170°C und 500°C, einem Druck zwischen 1 und 25 MPa und mit einer stündlichen Volumengeschwindigkeit zwischen 0,05 und 100 in Gegenwart von Wasserstoff im Verhältnis von 50 bis 2000 Liter Wasserstoff pro Liter Beschickung.

**Claims**

**1.** A catalyst comprising at least one amorphous or poorly crystallised matrix of the oxide type, at least one element of group VB, and at least one zeolite of the TON, MTT or FER structure type and at least fluorine

**2.** A catalyst according to claim 1, wherein the zeolite is synthesised in a fluoride medium.

**3.** A catalyst according to claim 1 or 2, wherein the zeolite is an NU-10, EU-13 or NU-23 zeolite.

**4.** A catalyst according to one of claims 1 to 3, also comprising at least one promoter element selected from the group constituted by boron, silicon, and phosphorus.

**5.** A catalyst according to one of claims 1 to 4, wherein the element of group VB is niobium.

**6.** A catalyst according to one of claims 1 to 5, also comprising at least one element selected from the elements of group VIB and group VIII.

**7.** A catalyst according to one of claims 1 to 6 comprising, in wt.% based on the total mass of catalyst:

0.1 to 99.8% of at least one zeolite of the structure type TON, MTT or FER as defined above,
0.1 to 99.7% of at least one porous, amorphous or poorly crystallised mineral matrix of the oxide type,
0.1 to 60% of at least one element selected from group VB,
0 to 60% of at least one element selected from the elements of group VIB and group VIII,
0 to 20% of at least one promoter element selected from the elements of the group constituted by phosphorus, boron and silicon,
0.1 to 15% of fluorine.

**8.** A process for the preparation of a catalyst according to one of claims 1 to 7 wherein:

a) a solid known as the precursor is dried and weighed, said solid containing at least the following compounds: at least one matrix, at least one zeolite of the structure type TON, MTT or FER, at least fluorine, optionally at least one element selected from the elements of group VIB and group VIII, optionally at least one promoter element selected from the group composed of boron, silicon and phosphorus, the whole solid preferably being formed,

b) the dry solid obtained in step a) is calcined at a temperature of at least 150°C,

c) the precursor solid defined in step b) is impregnated with a solution containing at least one element of group VB,

d) the damp solid is left to stand in a damp atmosphere at a temperature between 10 and 120°C,

e) the damp solid obtained in step d) is dried at a temperature between 60 and 150°C.

9. A process for preparation according to claim 8 wherein the catalyst is impregnated with at least one solution containing all or part of at least one element selected from the elements of group VIB and group VIII, at least fluorine, optionally at least one promoter element selected from the group composed of boron, silicon and phosphorus.

10. A process for the preparation of a catalyst according to one of claims 8 or 9 wherein at least one calcination is carried out at the end of any one of the preparation steps, at a temperature of at least 150°C.

11. A process for preparation according to one of claims 8 to 10, wherein sulphurising of the catalyst is carried out under a flow of a mixture of hydrogen/hydrogen sulfide or under pure hydrogen sulfide, at a temperature between 150 and 800°C.

12. A process for reducing the pour point of hydrocarbon feedstocks in the presence of a catalyst comprising at least one amorphous or poorly crystallised matrix of the oxide type, at least one element of group VB, at least one zeolite of structural type TON, MTT or FER, and at least fluorine.

13. A process according to claim 12 wherein the catalyst further comprises at least one element selected among elements of group VIB and group VIII.

14. A process according to anyone of claims 12 to 13 wherein the catalyst further comprises at least one element selected from the group constituted by boron, silicon and phosphorus.

15. A process for reducing the pour point of hydrocarbon feedstocks in the presence of a catalyst according to claim 7.

16. A process according to any one of claims 12 to 15 carried out at a temperature between 170°C and 500°C, a pressure between 1 and 25 MPa, and with an hourly volume velocity between 0.05 and 100, in the presence of hydrogen in a quantity of 50 to 2000 litres of hydrogen per litre of charge.